# EUROPEAN PATENT SPECIFICATION

(11) **EP 0 986 121 B1**
(45) Date of publication and mention of the grant of the patent: **25.11.2009**
(21) Application number: 98921823.5
(22) Date of filing: 27.05.1998
(51) Int. Cl.: H01M 4/58, H01M 4/62, H01M 4/02, H01M 10/40

(54) **ELECTRODE FOR NON-AQUEOUS ELECTROLYTE BATTERY**
ELEKTRODE FÜR BATTERIE MIT NICHTWÄSSRIGEM ELEKTROLYTEN
ELECTRODE POUR BATTERIE A ELECTROLYTE NON-AQUEUSE

(30) Priority: 27.05.1997 JP 13665997; 27.05.1997 JP 13666497; 27.05.1997 JP 13666697; 27.05.1997 JP 13666797
(43) Date of publication of application: 15.03.2000
(73) Proprietor: TDK Corporation, Chuo-ku, Tokyo 103-0027 (JP); DURACELL INC., Bethel, Connecticut 06801 (US)
(72) Inventor: KUROSE, Shigeo, Nagano 385-0004 (JP); IIJIMA, Tadayoshi, Nagano 385-0004 (JP); TAKAHASHI, Tetsuya, Kitasaku-gun, Nagano 389-0206 (JP); ADAMSON, David V., MA 01720 (US)
(74) Representative: Kilian, Helmut
(86) International application number: PCT/JP1998/002316
(87) International publication number: WO 1998/054776

(56) References cited:
- EP-A- 0 696 075
- EP-A- 0 709 906
- JP-A- 5 094 822
- JP-A- 6 243 897
- JP-A- 7 142 056
- JP-A- 7 263 028
- JP-A- 7 326 356
- US-A- 5 595 841

## Description

### TECHNICAL FIELD OF THE INVENTION

The present invention relates to an electrode for a non-aqueous electrolyte battery, and more particularly to a non-aqueous electrolyte battery electrode which contains lithium composite oxide as an active material and which is excellent in flexibility.

### TECHNICAL BACKGROUND OF THE INVENTION

Recent development of devices in the electronic field is remarkable, and various devices such as video cameras, liquid crystal cameras, portable telephones, laptop computers, and word processors are now being developed. In accordance therewith, there are increasing needs for reduction in size and weight and achievement of high energy density in batteries that are to be used as power sources for these electronic devices.

Conventionally, lead batteries or nickel-cadmium batteries have been used for these electronic devices. These conventional batteries cannot sufficiently meet the needs for reduction in size and weight and achievement of high energy density.

Accordingly, there are proposed non-aqueous electrolyte batteries using a non-aqueous electrolytic solution containing a lithium salt dissolved in a non-aqueous solvent. As these non-aqueous electrolyte batteries, batteries in which a metal lithium, a lithium alloy, or a carbon material capable of being doped and undoped with lithium ions is used as a negative electrode material and a lithium cobalt composite oxide is used as a positive electrode material are already in practical use.

Having a high operation voltage of 3 to 4V, the non-aqueous electrolyte batteries of this type can be made to have a high energy density and excellent cycle characteristics with only a small amount of self-discharge.

Also, in order to attain further reduction in size and weight and achievement of high energy density in these non-aqueous electrolyte batteries, eager researches for development of active materials and the like are now being carried out. As positive electrode active materials, Ni-containing lithium composite oxides such as lithium-nickel composite oxides and lithium-nickel-cobalt composite oxides are also proposed.

For example, as a prior art related to an electrode for a non-aqueous electrolyte battery, Japanese Examined Patent Publication No. 8-4007/1996 discloses an invention on a binder in an electrode for a non-aqueous electrolyte battery. The publication discloses, as a binder, a fluorine-type high-molecule copolymer mainly consisting of the following monomer units A, B and C in a specific molar ratio.
A : -CH₂-CF₂-
B : -CF(CF₃)-CF₂-
C : -CF₂-CF₂-

Although the publication gives a description on a solvent for dissolving the binder, it fails to provide a disclosure on the flexibility of the electrode.

Japanese Laid-open Patent Publication No. 4-215252/1992 discloses a non-aqueous electrolyte secondary battery including a positive electrode containing a positive electrode active material and an electrically conductive agent, a negative electrode, and a non-aqueous electrolyte, wherein a flake graphite is used as the electrically conductive agent. The publication gives a description on decrease in the internal resistance of the battery as an effect produced therefrom. However, the publication fails to provide a disclosure on the flexibility of the electrode.

Japanese Laid-open Patent Publication No. 6-111823/1994 discloses an invention on a binder in an electrode for a non-aqueous electrolyte battery. The publication discloses, as a binder, a denatured polyvinylidene fluoride containing, in its main chain, at least one hexafluoropropylene unit represented by the formula: -CF₂-CF(CF₃)-. Although the publication gives a description on the stability of a mixture-slurry, it fails to provide a disclosure on the flexibility of the electrode.

Japanese Laid-open Patent Publication No. 9-274920/1997 discloses polyvinylidene fluoride having a number-average molecular weight Mn of more than 1.0×10⁵ as a binder in a non-aqueous electrolyte battery. Although the publication gives a description on the improvement of binding force between a collector and a coating film containing an active material powder and a binder, it fails to provide a disclosure on the flexibility of the coating film.

### DISCLOSURE OF THE INVENTION

### Objects of the Invention

However, on examining the characteristics of lithium composite oxide, the present inventors have found out that the flexibility of the lithium composite oxide varies depending on its shape. If the flexibility varies, there will arise a problem that the degree of freedom in the shape decreases in incorporating the lithium composite oxide into a battery.

Therefore, the purpose of the present invention is to solve the above-mentioned problems of the prior art and to provide a non-aqueous electrolyte battery electrode that can give a large capacity to the battery and can improve the flexibility of the electrode.

### Summary of the Invention

The present inventors have made an eager research and found out that an electrode having an excellent flexibility can be obtained when a lithium nickel composite oxide having a half-value width in a specific range at an average particle diameter of its particle size distribution is combined with a suitable binder, or a suitable binder and a suitable electrically conductive agent, thus completing the present invention.

Accordingly, the present invention provides an electrode for a non-aqueous electrolyte battery, comprising at least a lithium composite oxide as an active material, an electrically conductive agent and a binder, said active material comprising LiₓNi_{y}M_{z}O₂ (where x satisfies 0.8<x<1.5, y+z satisfies 0.8<y+z<1.2, z satisfies 0≤z<0.35, and M is at least one element selected from Co, Mg, Ca, Sr, Al, Mn and Fe) having a half-value width in a range of 2.0 to 50µm at an average particle diameter of its particle size distribution, and said binder comprising fluorine rubber.

Also, the present invention provides an electrode for a non-aqueous electrolyte battery, comprising at least a lithium composite oxide as an active material, an electrically conductive agent and a binder, said active material comprising LiₓNi_{y}M_{z}O₂ (where x satisfies 0.8<x<1.5, y+z satisfies 0.8<y+z<1.2, z satisfies 0≤z<0.35, and M is at least one element selected from Co, Mg, Ca, Sr, Al, Mn and Fe) having a half-value width in a range of 2.0 to 50µm at an average particle diameter of its particle size distribution, said electrically conductive agent comprising graphite, and said binder comprising polyvinylidene fluoride.

According to the electrode of the present invention, since the lithium nickel composite oxide having a half-value width in a specific range at an average particle diameter of its particle size distribution is combined with a suitable binder, or a suitable binder and a suitable electrically conductive agent, the active material can be densely packed while maintaining the flexibility of the electrode, thereby providing excellent battery characteristics and flexibility of the electrode.

### Detailed Description of the Invention

The lithium composite oxide to be used in the present invention is represented by the general formula: LiₓNi_{y}M_{z}O₂ (where x satisfies 0.8<x<1.5, y+z satisfies 0.8<y+z<1.2, z satisfies 0≤z<0.35, and M is at least one element selected from Co, Mg, Ca, Sr, Al, Mn and Fe).

An example of a method for producing such a lithium composite oxide is, for example, a process in which a basic metal salt and an alkaline water-soluble lithium compound containing respectively an anion that volatilizes at the time of calcination of LiMetal³⁺O₂ (where the Metal contains Ni as a major component and further contains at least one element selected from Co, Mg, Ca, Sr, Al, Mn and Fe) are allowed to react in an aqueous medium to obtain a slurry, which is then dried and calcined.

The basic metal salt is represented by the general formula: Metal²⁺(OH₂₋ₙₖ(Aⁿ⁻)ₖ · mH₂O. Here, the Metal²⁺ is an ion containing Ni as a major component and possibly containing at least one element selected from Co, Mg, Ca, Sr, Al, Mn and Fe. Aⁿ⁻ represents an anion with n valences (where n=1 to 3) such as a nitrate ion, a chloride ion, a bromide ion, an acetate ion, or a carbonate ion. Further, k satisfies 0.03≤k≤0.3; and m satisfies 0≤m<2.

The basic metal salt represented by the above-mentioned formula can be produced by adding to an aqueous solution of Metal²⁺ an alkali of about 0.7 to 0.95 equivalent, preferably about 0.8 to 0.95 equivalent, relative to the Metal²⁺, and reacting them under a reaction condition of about 80°C or less, and then maturing the reaction product at a temperature of 40°C to 70°C for 0.1 to 10 hours, followed by washing with water to remove the by-products. The alkali to be used in the reaction may be a hydroxide of an alkali metal such as sodium hydroxide, a hydroxide of an alkali earth metal such as calcium hydroxide, an amine, or the like.

A basic metal salt selected from the compounds represented by the above-mentioned formula and one or more lithium compounds selected from lithium hydroxide, lithium carbonate, hydrates thereof, and the like are allowed to react in water at a concentration in the range of 5 to 25 wt% and at a temperature in the range from room temperature to 100°C to obtain a slurry, which is then subjected to spray drying for improvement of uniformity in the shape of the composition to be obtained.

The lithium composite oxide can be obtained by subjecting the dried product to a thermal treatment for calcination in an oxidizing gas atmosphere containing air, oxygen, ozone, or the like in a temperature range of about 700 to 1000°C for about 0.1 to 20 hours.

Another example of a method for producing a lithium composite oxide to be used in the present invention is a process that uses a water-soluble lithium compound and a basic metal carbonate obtained from a water-soluble metal compound.

The water-soluble metal compound to be used in this process is a nitrate, a sulfate, a metal chloride, or the like. This water-soluble metal compound may contain a nickel compound as a major component and may be mixed with a given amount of another water-soluble metal compound so that at least one element selected from Co, Mg, Ca, Sr, Al, Mn and Fe may be blended therewith.

The basic metal carbonate may be obtained by filtrating and drying a precipitate obtained by allowing a mixture of the above-mentioned water-soluble metal compounds to react with a compound selected from the group consisting of an alkali carbonate, an alkali bicarbonate, ammonium carbonate and ammonium bicarbonate in water, or a precipitate obtained by allowing sodium hydroxide to be present for reaction in the above-mentioned reaction system. In this case, in order to produce a good precipitate, it is preferable to use a little excessive amount of the carbonate, and also it is important to control the stirring condition so as to control the specific surface area of the precipitate.

To the basic metal carbonate thus obtained, a powder of a water-soluble lithium compound such as lithium carbonate or lithium hydroxide is added at a desired ratio of the metal to Li. The resultant mixture in a powder state is first heated to 300 to 500°C in the presence of an inert gas or an oxygen-containing gas. This heating allows only the decomposition of the basic metal carbonate to proceed, whereby carbonic acid gas in the crystal structure is released. This heating is continued until the generation of the carbonic acid gas substantially stops so as to convert all of the basic metal carbonate into a metal oxide having numerous fine pores.

After the generation of carbonic acid gas substantially stops, the temperature is further raised to allow the molten water-soluble lithium compound to penetrate into the fine pores of the metal oxide, whereby the two compounds will be in an extremely close contact. At this moment, the resultant product is calcined at a temperature of 700 to 900°C in the presence of oxygen gas or an air rich in oxygen, whereby Ni is turned from bivalent to trivalent to produce a Li composite oxide.

Here, the larger the specific surface area of the basic metal carbonate to be used is (for example, more than 100 m²/g), the more preferable it is, because gas discharge and generation of fine pores after preliminary calcination will be more efficiently performed.

The lithium composite oxide to be used in the present invention is represented by the above-mentioned compositional formula: LiₓNi_{y}H_{z}O₂ (where x satisfies 0.8<x<1.5, y+z satisfies 0.8<y+z<1.2, z satisfies 0≤z<0.35, and M is at least one element selected from Co, Mg, Ca, Sr, Al, Mn and Fe), and has a half-value width in a range of 2.0 to 50µm at an average particle diameter of its particle size distribution. The particle size distribution is measured by the laser diffraction/scattering method.

In the present invention, the average particle diameter of the lithium composite oxide is preferably 1.0 to 30µm, more preferably 2.0 to 20µm. The half-value width at the average particle diameter of the particle size distribution is preferably 2.0 to 20µm.

Lithium composite oxide having such a particle size distribution can be obtained by classification of the lithium composite oxide obtained by the above-mentioned process.

If the half-value width is less than 2.0 µm, the amount of gap among the active materials in the electrode will be large and the packing will be insufficient, because the particle size is uniform. Accordingly, an operation such as increasing the compression force of the later-mentioned roller pressing apparatus will be needed in order to increase the electrode capacity. Further, it is considerably difficult to fabricate the lithium composite oxide having this half-value width, and an extremely great number of manufacturing steps will be needed, so that it is extremely impractical.

On the other hand, if the half-value width exceeds 50 µm, large particles and fine particles will coexist in a mixture, so that the packing of the active material will be too good. In this case, although it is advantageous in view of the electrode capacity, the electrode will have poor physical flexibility, so that the electrode will be rigid and raises problems such as crack and fracture.

Meanwhile, if the lithium composite oxide having a particle size distribution according to the present invention is used as a positive electrode active material, the active material can be packed densely while maintaining the flexibility of the electrode, so that the energy density can be tremendously increased. Accordingly, it is possible to obtain a non-aqueous electrolyte battery electrode having an advantage of the nickel-containing lithium composite oxide particles that they are less expensive and have a large capacity.

The binder to be used in the present invention is fluorine rubber or polyvinylidene fluoride (PVDF). Examples of the fluorine rubbers to be used in the present invention include vinylidene fluoride-hexafluoropropylene (VDF-HFP) type copolymers, vinylidene fluoride-hexafluoropropylene-tetrafluoroethylene (VDF-HFP-TFE) type copolymers, vinylidene fluoride-pentafluoropropylene (VDF-PFP) type copolymers, vinylidene fluoride-pentafluoropropylene-tetrafluoroethylene (VDF-PFP-TFE) type copolymers, vinylidene fluoride-perfluoromethyl vinyl ether-tetrafluoroethylene (VDF-PFMVE-TFE) type copolymers, ethylene-tetrafluoroethylene type copolymers, and propylene-tetrafluoroethylene type copolymers. A fluorine-containing polymer with its hydrogen in the main chain substituted by an alkyl group(s) may be used as well.

The amount of the binder to be added is preferably 1 to 20 wt%, more preferably 2 to 15 wt%, although it depends on the specific surface areas and the particle size distributions of the active material and the electrically conductive agent, the strength of the intended electrode, and the like.

An explanation will be given on the electrically conductive agent to be used in the present invention.

In the present invention, when a fluorine rubber type resin other than polyvinylidene fluoride (PVDF) is to be used as a binder, the electrically conductive agent is not specifically limited, and any electron-conducting material can be used as long as it does not undergo a chemical change. Examples of the electrically conductive agents typically include graphites such as natural graphite (vein graphite, flake graphite and others) and artificial graphite, carbon blacks such as acetylene black, Ketjen black, channel black, furnace black, and thermal black, electrically conductive fibers such as carbon fiber, carbon fiber grown in gaseous phase, and metal fiber, and metal powders such as copper, nickel, aluminum, and silver. Among these, acetylene black and flake graphite are preferable. The above-mentioned electrically conductive agents may be used either alone or in combination.

Specifically, the electrically conductive agent may be one of the LF series manufactured by Chuetsu Graphite Works Co., Ltd., the UFG series manufactured by Showa Denko K.K., the KS series manufactured by LONZA Co., Ltd., MICROCARBO-G series manufactured by Kansai Netsukagaku Co., Ltd., Ecoscarbons manufactured by Ecos Giken Co., Ltd., and others.

When polyvinylidene fluoride (PVDF) is to be used as the binder in the present invention, the electrically conductive agent to be used is limited to the graphites among the above-mentioned ones. If those other than the graphites are used, the flexibility of the electrode decreases, so that electrode cracks are generated when a battery is formed with the electrode. A flake graphite is preferable among the graphites.

The amount of the electrically conductive agent to be added is preferably 0.1 to 15 wt%, more preferably 1 to 10 wt%, in a dried coating film. If the amount is less than 0.1 wt%, the electric conductivity will be insufficient, and the decrease in capacity is liable to occur. On the other hand, if the amount exceeds 15 wt%, there will be decrease in the amount of active materials that substantially act, and the decrease in capacity is liable to occur in this case as well.

The solvent to be used for the electrode active material mixture-coating material is not specifically limited, so that a general organic solvent may be used. Examples of the organic solvents to be used in the present invention include saturated hydrocarbons such as hexane, aromatic hydrocarbons such as toluene and xylene, alcohols such as methanol, ethanol, propanol and butanol, ketones such as acetone, methyl ethyl ketone, methyl isobutyl ketone, and diisobutyl ketone, esters such as ethyl acetate and butyl acetate, ethers such as tetrahydrofuran, dioxane, and diethyl ether, amides such as N,N-dimethylformamide, N-methylpyrrolidone and N,N-dimethylacetamide, and halogenated hydrocarbons such as ethylene chloride and chlorobenzene. Among these, amide-type solvents are preferable because they can dissolve fluorine-containing polymers. These solvents may be used either alone or as a mixture of two or more kinds.

The electrode active material mixture-coating material can be prepared by mixing the active material, the electrically conductive agent, the binder and the organic solvent and making them into a slurry by an ordinary method. For example, they are mixed in a dry air or in an inert gas by the roll mill method.

The prepared mixture-coating material is applied onto a collector and dried. The collector is not specifically limited and may be any electron-conducting substance that does not undergo a chemical change when it is formed into a battery. For example, the collector may be formed of aluminum, an aluminum alloy, nickel, stainless steel, titanium, or the like. Besides these metals, aluminum or stainless steel whose surface is treated with carbon, nickel, or titanium may be used as well. Especially, aluminum or an aluminum alloy is preferable. The collector may have a foil-like, film-like, net-like, porous, foamed, or the like shape. The thickness of the collector is 1 to 100µm, preferably 1 to 50µm.

The electrode active material mixture-coating material is applied onto the collector by an ordinary well-known coating method such as the reverse roll method, direct roll method, blade method, knife method, extrusion nozzle method, curtain method, gravure roll method, bar coat method, dip method, kiss coat method, squeeze method, and the like. Among these, it is preferable to adopt the extrusion nozzle method, whereby a good surface state of the coating layer can be obtained by suitably selecting the solvent composition of the mixture and the drying condition so that the coating material is applied onto the collector at a rate of 5 to 100 m/min.

The drying temperature is preferably 30 to 150°C, more preferably 50 to 140°C. If the drying temperature is less than 30°C, the solvent will not be sufficiently dried. On the other hand, if the drying temperature exceeds 150°C, the binder may not be distributed uniformly on the surface of the electrode because the evaporation speed of the solvent is too high, thereby leading to deterioration in the electrode properties.

Here, the thickness, length, and width of the coating layer is determined by the final size of the battery to be obtained. The thickness of the coating layer is preferably adjusted by the ordinarily-adopted calendar processing after the coating step. The processing pressure is preferably 0.2 to 10 t/cm, and the processing temperature is preferably 10 to 150°C.

### BRIEF DESCRIPTION OF THE DRAWING

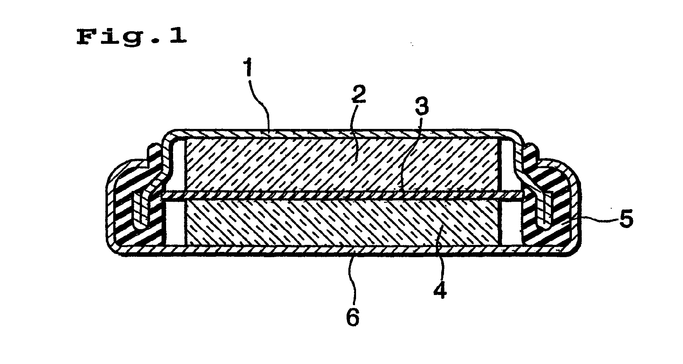

Fig. 1 is a cross-sectional view illustrating a coin-type battery used in examples of the present invention for measurement of battery characteristics.

### MODE FOR CARRYING OUT THE INVENTION

Hereafter, the present invention will be more specifically explained by examples shown below. However, the present invention is not limited by these examples.

### [EXAMPLE 1]

A positive electrode active material was prepared in the following manner.

Nickel nitrate and cobalt nitrate were mixed in an aqueous solution in a ratio of Ni/Co (molar ratio) = 0.8/0.2 to form a precipitate, which was dried by a spray dryer to yield approximately spherical particles. These particles and lithium hydroxide were mixed in a ratio of Li/Ni/Co (molar ratio) = 1/0.8/0.2, and the resultant mixture was calcined to obtain LiNi_{0.8}Co_{0.2}O₂.

Through observation by the electron microscope photography, the shape of this active material was found to be generally spherical. Also, the particle size distribution of the active material was measured by a microtrack particle size analyzer (manufactured by Nikkiso Co., Ltd.) with the result that the average particle diameter was 10µm, and the half-value width at the average particle diameter was 60µm. The active material was classified into a sample having a half-value width of 1.0µm at the average particle diameter (Comparative Example 1-1), a sample with 2.0µm(Example 1-1), a sample with 5.0µm (Example 1-2), a sample with 10µm (Example 1-3), a sample with 20µm (Example 1-4), and a sample with 50 µm (Example 1-5). Also, the active material which has not been subjected to classification, i.e. the one having a half-value width of 60µm, was used as a sample (Comparative Example 1-2).

The samples were used as active materials to prepare the active material-mixture coating materials having the following blending compositions.

### (Composition of blending)

| | |
|---|---|
| Positive electrode active material: | |
| LiNi_{0.8}Co_{0.2}O₂ | 92 parts by weight |
| Electrically conductive agent: Acetylene black | |
| Acetylene black | 4 parts by weight |
| (Manufactured by Denki Kagaku Kogyo K.K.) | |
| Binder: | |
| fluorine rubber (VDF-HFP copolymer) | 4 parts by weight |
| (VITON A-HV manufactured by Showa Denko / Dupont) | |
| Mixing Solvent: | |
| Methyl isobutyl ketone (MIBK)/N-methyl-2-pyrrolidone = 1/1 (ratio by weight) | 67 parts by weight |

VITON A-HV (4 parts by weight) was dissolved in the mixing solvent (56 parts by weight) to prepare a binder solution (60 parts by weight). The active material (92 parts by weight) and the electrically conductive agent (4 parts by weight) were mixed in dry process by a hypermixer, and the mixture was Introduced into a pressure kneader. The above-mentioned binder solution (13 parts by weight) was added to the mixture and the resultant was kneaded for 30 minutes while cooling the jacket of the pressure kneader with water. The kneaded product was taken out, and the binder solution (47 parts by weight) and the mixing solvent (11 parts by weight) were added to dissolve the product in the hypermixer to give an active material mixture-coating material.

The prepared mixture-coating material was applied onto one surface of a collector of aluminum foil of 20µm thickness by an extrusion nozzle and dried. Then, the mixture-coating material was applied to the other surface of the collector in a similar manner and dried. The obtained coated collector was press-molded by a roller press machine by maintaining a constant pressure and cut into a given size. Thereafter, the mixture coating film on one side of the collector was peeled off to obtain each electrode with a mixture layer of 65µm thickness.

### (Electrode density)

The electrode density was measured for each of the electrodes obtained in Examples 1-1 to 1-5 and Comparative Examples 1-1 to 1-2.

### (Battery Characteristics)

The battery characteristics of each of the electrodes obtained in the Examples and the Comparative Examples were measured in the following manner.

Each of the obtained electrodes was dried for removal of residual moisture in the positive electrode active material layer to fabricate a circular positive electrode having a diameter of 15.5 mm. Separately, metal lithium having a thickness of 1.85 mm was cut into a circular shape with a diameter of 15.5 mm as a negative electrode. Further, a non-aqueous electrolyte solution was prepared by dissolving LiPF₆ at a concentration of 1 mol/liter in a mixture solvent containing ethylene carbonate and dimethyl carbonate at a ratio of 1:1 (volume ratio).

A coin-type battery having a diameter of 20 mm×thickness of 2.5 mm was prepared, as shown in Fig. 1, by using the non-aqueous electrolyte solution, the positive electrode, the negative electrode, a thin film separator made of polypropylene, a negative electrode cup, a positive electrode can, and a gasket. In the coin-type battery of Fig. 1, the positive electrode (4) housed in the positive electrode can (6) and the negative electrode (2) housed in the negative electrode cup (1) are laminated through the intermediary of the separator (3); and the positive electrode can (6) and the negative electrode cup (1) are caulked and sealed through the intermediary of the gasket (5). In Fig. 1, the collector is not shown.

The batteries thus fabricated were charged under a condition with a charge voltage of 4.2V, a charge current of 1mA, and a charge time of 20 hours, and then discharged under a condition with a discharge current of 1mA and an final voltage of 3.0V to determine their charge/discharge capacities.

### (Flexural property)

The sample electrodes prepared in the Examples and Comparative Examples were bent by 180° along the periphery of a cylinder having a diameter of 1 mm to observe whether cracks and the like would be generated according to the following standard.
○ : Those in which generation of cracks was not observed
△ : Those in which generation of small cracks was observed but the electrode with the cracks was determined to be at a practically usable level
× : Those in which generation of cracks was observed and the electrode was not usable

The above results are shown in Table 1.

**Table 1**

| | Half-Value Width (µm) | Electrode Density (g/cm³) | Initial Discharge Capacity (mAh/g) | Flexural Property |
|---|---|---|---|---|
| COMPARATIVE EXAMPLE 1-1 | 1.0 | 2.70 | 179 | ○ |
| EXAMPLE 1-1 | 2.0 | 3.02 | 181 | ○ |
| EXAMPLE 1-2 | 5.0 | 3.10 | 183 | ○ |
| EXAMPLE 1-3 | 10 | 3.13 | 181 | ○ |
| EXAMPLE 1-4 | 20 | 3.15 | 182 | ○ |
| EXAMPLE 1-5 | 50 | 3.40 | 183 | △ |
| COMPARATIVE EXAMPLE 1-2 | 60 | 3.50 | 183 | × |

From Table 1, it is understood that the electrodes of the Examples were excellent in the flexural property, have high electrode densities, and are also excellent in the initial discharge capacity. The electrode of the Comparative Example 1-1 has a half-value width of less than 2.0µm in the particle size distribution with low electrode density and low discharge capacity. The electrode of the Comparative Example 1-2 has a half-value width exceeding 50µm in the particle size distribution and its flexural property was inferior.

### [EXAMPLE 2]

An electrode was prepared and evaluated in the same manner as in Example 1-2 except that LiNi_{0.8}Co_{0.2}O₂ (having an average particle diameter of 10µm and a half-value width of 5.0µm) was used as the positive electrode active material, and VITON GF (fluorine rubber VDF-HFP-TFE copolymer) was used as the binder instead of VITON A-HV manufactured by Showa Denko/Dupont.

The result is shown in Table 2.

**Table 2**

| | Electrode Density (g/cm³) | Initial Discharge Capacity (mAh/g) | Flexural Property |
|---|---|---|---|
| EXAMPLE 2 | 3.20 | 185 | ○ |

From Table 2, it is understood that the electrode of Example 2 is excellent in the flexural property, has a high electrode density, and is also excellent in the initial discharge capacity.

### [EXAMPLE 3 (PVDF sample)]

An active material mixture-coating material having the following blending composition was prepared by using LiNi_{0.8}Co_{0.2}O₂ (having an average particle diameter of 10µm and a half-value width of 5.0µm) as the positive electrode active material and polyvinylidene fluoride (PVDF) as the binder.

| | |
|---|---|
| (Composition of blending) | |
| Positive electrode active material: | |
| LiNi_{0.8}Co_{0.2}O₂ | 90 parts by weight |
| (Average particle diameter = 10µm, | |
| half-value width = 5.0µm) | |
| Electrically conductive agent: | |
| flake graphite | 6 parts by weight |
| (KS 25 manufactured by LONZA, | |
| with an average particle diameter of 11µm) | |
| Binder: polyvinylidene fluoride (PVDF) | 4 parts by weight |
| (KYNAR741 manufactured by ELF-ATOCHEM Japan) | |
| Solvent: N-methyl-2-pyrrolidone (NMP) | 45 parts by weight |

PVDF (4 parts by weight) was dissolved in NMP (36 parts by weight) to prepare a binder solution (40 parts by weight). The active material (90 parts by weight) and the electrically conductive agent (6 parts by weight) were mixed in dry process by a hypermixer, and the mixture was introduced into a pressure kneader. The above-mentioned binder solution (13 parts by weight) was added to the mixture and the resultant was kneaded for 30 minutes while cooling the jacket of the pressure kneader with water. The kneaded product was taken out, and the binder solution (27 parts by weight) and NMP (9 parts by weight) were added to dissolve the product in the hypermixer to give an active material mixture-coating material.

The prepared mixture-coating material was applied onto one surface of a collector of aluminum foil of 20µm thickness by an extrusion nozzle and dried. Then, the mixture coating material was applied to the other surface of the collector in a similar manner and dried. The obtained coated collector was press-molded by a roller press machine and cut into a given size. Thereafter, the mixture coating film on one side of the collector was peeled off to obtain an electrode with a mixture layer of 65µm thickness. This electrode was evaluated in the same manner as in Example 1.

### [Comparative Example 2]

An active material mixture-coating material was prepared in the same manner as in Example 3 except that acetylene black (6 parts by weight) was used as the electrically conductive agent instead of flake graphite (6 parts by weight). An electrode was prepared using this mixture-coating material and adjusting the pressure of the roller press so that the electrode density would be the same as in Example 3, and the electrode was evaluated.

The results of the above are shown in Table 3.

**Table 3**

| | Electrode Density (g/cm³) | Initial Discharge Flexural Capacity (mAh/g) | Property |
|---|---|---|---|
| EXAMPLE 3 | 3.50 | 181 | ○ |
| COMPARATIVE EXAMPLE 2 | 3.50 | 183 | × |

From Table 3, it is understood that the electrode of Example 3 is excellent in the flexural property, has a high electrode density, and is also excellent in the initial discharge capacity. The electrode of Comparative Example 2 is inferior in the flexural property.

The above examples are described merely for illustrative purposes and these should not be construed as restrictive. Further, any modification within the equivalent to the claims is intended to fall under the scope of the present invention.

### INDUSTRIAL APPLICABILITY

As shown above, according to the electrode of the present invention, since the lithium nickel composite oxide having a half-value width in a specific range at an average particle diameter of its particle size distribution is combined with a suitable binder, or a suitable binder and a suitable electrically conductive agent, the active material can be densely packed while maintaining the flexibility of the electrode, thereby providing excellent battery characteristics and flexibility of the electrode.

Therefore, according to the present invention, there is provided a non-aqueous electrolyte battery electrode having an advantage of the nickel-containing lithium composite oxide particles that they are less expensive and have a large capacity.

## Claims

1. An electrode for a non-aqueous electrolyte battery, comprising at least a lithium composite oxide as an active material, an electrically conductive agent and a binder,
said active material comprising LiₓNi_{y}M_{z}O₂ (where x satisfies 0.8<x<1.5, y+z satisfies 0.8<y+z<1.2, z satisfies 0≤z<0.35, and M is at least one element selected from Co, Mg, Ca, Sr, Al, Mn and Fe) having a half-value width in a range of 2.0 to 50µm at an average particle diameter of its particle size distribution, and said binder comprising fluorine rubber.

2. An electrode for a non-aqueous electrolyte battery, comprising at least a lithium composite oxide as an active material, an electrically conductive agent and a binder,
said active material comprising LiₓNi_{y}M_{z}O₂ (where x satisfies 0.8<x<1.5, y+z satisfies 0.8<y+z<1.2, z satisfies 0≤z<0.35, and M is at least one element selected from Co, Mg, Ca, Sr, Al, Mn and Fe) having a half-value width in a range of 2.0 to 50µm at an average particle diameter of its particle size distribution, said electrically conductive agent comprising graphite, and said binder comprising polyvinylidene fluoride.

## Patentansprüche

1. Elektrode für Batterie mit nicht-wässrigem Elektrolyten, WObei diese wenigstens ein Lithium-Verbundoxid als aktives Material, ein elektrisch leitendes Mittel und ein Bindemittel aufweiset,
wobei das aktive Material LiₓNi_{y}M_{z}O₂ (wobei x 0,8<x<1,5, y+z 0,8<y+z<1,2, z 0≤z<0,35 erfüllt und M wenigstens ein Element ausgewählt aus Co, Mg, Ca, Sr, Al, Mn und Fe ist) eine Halbwertsbreite im Bereich von 2,0 bis 50 µm bei einem mittleren Teilchendurchmesser seiner Teilchengrößenverteilung hat, und das Bindemittel Fluorkautschuk umfasst.

2. Elektrode für Batterie mit nicht-wässrigem Elektrolyten, wobei diese wenigstens ein Lithium-Verbundoxid als aktives Material, ein elektrisch leitendes Mittel und ein Bindemittel aufweiset,
wobei das aktive Material LiₓNi_{y}M_{z}O₂ (wobei x 0,8<x<1,5, y+z 0,8<y+z<1,2, z 0≤z<0,35 erfüllt und M wenigstens ein Element ausgewählt aus Co, Mg, Ca, Sr, Al, Mn und Fe ist) eine Halbwertsbreite im Bereich vorn 2,0 bis 50 µm bei einem mittleren Teilchendurchmesser seiner Teilchengrößenverteilung hat, das elektrisch leitende Mittel Graphit umfasst und das Bindemittel Polyvinylidenfluorid umfasst.

## Revendications

1. Électrode pour batterie à électrolyte non aqueux, comprenant au moins un oxyde composite de lithium à titre de matériau actif, un agent électriquement conducteur et un liant, ledit matériau actif comprenant du LiₓNi_{y}M_{z}O₂ (où x satisfait à la relation 0,8 < x < 1,5, y+z satisfait à la relation 0,8 < y+z < 1,2, z satisfait à la relation 0 ≤ z < 0,35, et M est au moins un élément choisi parmi Co, Mg, Ca, Sr, Al, Mn et Fe) ayant une largeur de demi-atténuation située dans la plage allant de 2,0 à 50 µm au diamètre de particules moyen de sa distribution de granulométrie, et ledit liant comprenant un caoutchouc fluoré.

2. Électrode pour batterie à électrolyte non aqueux, comprenant au moins un oxyde composite de lithium à titre de matériau actif, un agent électriquement conducteur et un liant, ledit matériau actif comprenant du LiₓNi_{y}M_{z}O₂ (où x satisfait à la relation 0,8 < x < 1,5, y+z satisfait à la relation 0,8 < y+z < 1,2, z satisfait à la relation 0 ≤ z < 0,35, et M est au moins un élément choisi parmi Co, Mg, Ca, Sr, Al, Mn et Fe) ayant une largeur de demi-atténuation située dans la plage allant de 2,0 à 50 µm au diamètre de particules moyen de sa distribution de granulométrie, ledit agent électriquement conducteur comprenant du graphite, et ledit liant comprenant du poly-(fluorure de vinylidène).
